# EUROPEAN PATENT APPLICATION

(11) **EP 1 748 607 A1**
(43) Date of publication of application: **31.01.2007**
(21) Application number: 06253730.3
(22) Date of filing: 17.07.2006
(51) Int. Cl.: H04L 12/56, H04L 29/06

(54) **Communication system, communication apparatus, communication method, communication control method, communication control program, and program storage medium**

(30) Priority: 27.07.2005 JP 2005217806
(71) Applicant: SONY CORPORATION, Tokyo 141 (JP)
(72) Inventor: Sugi, Junjiro, Imt. Prop. Dpt., Sony Corporation, Tokyo 141 (JP)
(74) Representative: DeVile, Jonathan Mark

(57) **Abstract**

A communication system operates in accordance with predetermined communication standards by setting predetermined system information within a communication apparatus. The communication system includes a first communication apparatus having communication control means for setting the system information, communication means based on the system information, system information storage means, and system information providing means for providing a user with the information. The communications system also includes second communication apparatus having communication control means for setting the information, communication means, system information storage means, and system information input means. In operation, the first communication apparatus reads the information from the storage means, the system information providing means provides the user with the information, the user inputs the information to the second communication apparatus to share the information, and communication with the second communication apparatus starts; and when the information is input, the second communication apparatus stores the input information in the system information storage means to share, and communication with the first communication apparatus starts.

## Description

### Background of the Invention

### 1. Field of the Invention

The present invention relates to communications systems for performing communications in conformity with predetermined communications standards by setting predetermined system information to a communication apparatus.
Embodiments of the present invention can provide a communication system, a communication apparatus, a communication method, a communication control method, a communication control program, and a program storage medium, respectively for wireless communication among a plurality of communication apparatus.

### 2. Description of Related Art

Wireless local area network (LAN) communication is recently used for communication among a plurality of information processing terminals. In order to use wireless LAN communication, it becomes necessary to set identification information for identifying a wireless LAN, to authenticate at the start of connection, and to set security information for encrypting data communication to follow. Various security scheme standards have been used conventionally, such as a wired equivalent privacy (WEP) scheme in conformity with IEEE802.11 regulations and a common key scheme in conformity with IEEE802.11i regulations.

### Summary of the Invention

Various aspects and features of the present invention are defined in the appended claims.

Since wireless communication uses radio waves, it is difficult to limit a communication range. There is a danger that a malicious third party taps illegally wireless communication from a physically remote location, if a high performance antenna and a wireless communication apparatus are used. In order to hinder illegal access by communication tapping of this kind, wireless LAN communication has conventionally used security scheme standards such as a wired equivalent privacy (WEP) scheme in conformity with IEEE802.11 regulations and a common key scheme in conformity with IEEE802.11i regulations. However, algorithms of authentication and encryption of this type are analyzed in some cases by malicious third parties, leaving a danger of illegal access of communication data.

These security schemes require that users should set information necessary for authentication and encryption to both information processing terminals for wireless communication, before wireless LAN communication starts. In order to conduct this setting, it is necessary for a network manager to notify users of necessary information in advance, by using documents, network lines or the like. This work is very inconvenient. In order to eliminate this inconvenience, it is desired to provide a simpler information setting method.

The present invention has been proposed by considering the above-described circumstances. According to embodiments of the present invention, there are provided a communication system, a communication apparatus, a communication method, a communication control method, a communication control program, and a program storage medium, respectively capable of allowing users to perform communication connection settings safely and easily at a location which limits persons to enter.

According to an embodiment, the present invention provides a communication system for performing communication in conformity with predetermined communication standards by setting predetermined system information to a communication apparatus, the communication system including: a first communication apparatus having communication control means for setting system information to allow communication, communication means for performing communication based on the system information set by the communication control means, system information storage means storing the system information for communication, and system information providing means for providing a user with the system information in a recognizable state; and a second communication apparatus having communication control means for setting the system information to allow communication, communication means for performing communication based on the system information set by the communication control means, system information storage means for storing the system information for communication, and system information input means for inputting the system information; wherein the first communication apparatus reads the system information from the system information storage means, the system information providing means provides the user with the system information in a recognizable state, the user inputs the system information to the second communication apparatus to share the system information with the second communication apparatus, and communication with the second communication apparatus starts in accordance with the shared system information; and when the system information is input from the system information input means, the second communication apparatus stores the input system information in the system information storage means to share the system information with the first communication apparatus, and communication with the first communication apparatus starts in accordance with the shared system information.

The present invention provides a communication apparatus in a communication system for performing communication in conformity with predetermined communication standards by setting predetermined system information to the communication apparatus, the communication apparatus including: communication control means for setting system information to allow communication; communication means for performing communication based on the system information; system information storage means storing the system information; and system information providing means for providing a user with the system information in a recognizable state, wherein the system information is read from the system information storage means and provided to a user in a recognizable state to share the system information with another communication apparatus and start communication with the another communication apparatus in accordance with the shared system information.

The present invention provides a communication apparatus for communicating with another communication apparatus having system information providing means for providing system information, in a communication system for performing communication in conformity with predetermined communication standards by setting in common predetermined system information, the communication apparatus including: communication control means for setting system information to allow communication; communication means for performing communication based on the system information; system information storage means for storing the system information; and system information input means for inputting the system information, wherein when the system information is input from the system information input means, the input system information is stored in the system information storage means to share the system information with the another communication apparatus and start communication with the another communication apparatus in accordance with the shared system information.

The present invention provides a communication method for a communication system for performing communication in conformity with predetermined communication standards by setting predetermined system information to a communication apparatus, wherein: a first communication apparatus reads the system information stored in advance and provides a user with the system information in a recognizable state, the user inputs the system information to a second communication apparatus to share the system information with the second communication apparatus, and communication with the second communication apparatus starts in accordance with the shared system information; and as the system information is input, the second communication apparatus stores the input system information to share the system information with the first communication apparatus, and communication with the first communication apparatus starts in accordance with the shared system information.

The present invention provides a communication control method for a communication apparatus in a communication system for performing communication in conformity with predetermined communication standards by setting in common predetermined system information to the communication apparatus, wherein: system information stored in advance is read and provided to a user in a recognizable state to share the system information with another communication apparatus and communicate with the another communication apparatus in accordance with the shared system information.

The present invention provides a communication control method for communicating with another communication apparatus having system information providing means for providing system information, in a communication system for performing communication in conformity with predetermined communication standards by setting predetermined system information, wherein when system information is input, the input system information is shared with the another communication apparatus to communicate with the another communication apparatus in accordance with the shared system information.

The present invention provides a communication control program to be executed by a computer and installed in a communication apparatus in a communication system for performing communication in conformity with predetermined communication standards by setting predetermined system information to the communication apparatus, wherein: the communication apparatus reads system information stored in advance and provides a user with the system information in a recognizable state, the user inputs the system information to another communication apparatus to share the system information with the another communication apparatus, and communication with the another communication apparatus starts in accordance with the shared system information.

The present invention provides a communication control program to be executed by a computer and installed in a communication apparatus for communicating with another communication apparatus having system information providing means for providing system information, in a communication system for performing communication in conformity with predetermined communication standards by setting predetermined system information, wherein: when system information is input, the input system information is shared with the another communication apparatus to communicate with the another communication apparatus in accordance with the shared system information.

The present invention provides a program storage medium storing a communication control program to be executed by a computer and installed in a communication apparatus in a communication system for performing communication in conformity with predetermined communication standards by setting predetermined system information to the communication apparatus, wherein: the communication apparatus reads system information stored in advance and provides a user with the system information in a recognizable state, the user inputs the system information to another communication apparatus to share the system information with the another communication apparatus, and communication with the another communication apparatus starts in accordance with the shared system information.

The present invention provides a program storage medium storing a communication control program to be executed by a computer and installed in a communication apparatus for communicating with another communication apparatus having system information providing means for providing system information, in a communication system for performing communication in conformity with predetermined communication standards by setting predetermined system information, wherein: when system information is input, the input system information is stored and transmitted, and the another communication apparatus executes an authentication process in accordance with the system information to start communication.

According to the wireless communication system of the present invention, the first communication apparatus notifies a user of connection setting information, and the user inputs the connection setting information to the second communication apparatus to perform communication setting. Since the communication apparatus is installed at a location limiting persons to enter, the range of providing each user with the connection setting information is limited and the user can perform connection setting safely.

In contrast to a conventional provision of connection setting information by documents or via Internet lines or the like, connection setting information providing means of the communication apparatus presents a user with connection setting information, so that a user can perform connection setting more easily.

### Brief Description of the Drawings

The invention will now be described by way of example with reference to the accompanying drawings, throughout which like parts are referred to by like references, and in which:
Fig. 1 is a schematic diagram showing a wireless LAN system;
Fig. 2 is a block diagram showing the structure of a base unit according to a first embodiment;
Fig. 3 is a block diagram showing the structure of a monitor unit according to the first embodiment;
Fig. 4 is a block diagram showing the structure of a wireless LAN communication unit according to the first embodiment;
Fig. 5 is a flow chart illustrating a wireless LAN system information setting processing according to the first embodiment;
Fig. 6 is a block diagram showing the structure of a base unit according to a second embodiment;
Fig. 7 is a block diagram showing the structure of a monitor unit according to the second embodiment;
Fig. 8 is a block diagram showing the structure of a wireless LAN communication unit according to the second embodiment;
Fig. 9 is a flow chart illustrating a wireless LAN system information setting processing according to the second embodiment; and
Fig. 10 is a flow chart illustrating a wireless LAN system information setting processing according to the second embodiment;

### Description of the Preferred Embodiments

A wireless LAN system adopting the present invention will be described in detail with reference to the accompanying drawings.

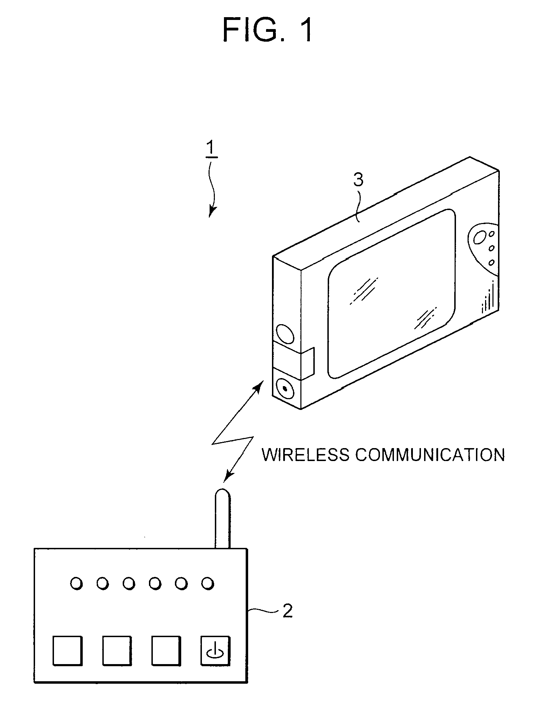

Fig. 1 is a diagram showing the configuration of a wireless LAN system 1 according to the first embodiment of the present invention.

As shown in Fig. 1, the wireless LAN system 1 is constituted of a base unit 2 which is a communication apparatus having a wireless LAN communication means, and a monitor unit 3 for communicating with the base unit 2 via the wireless communication means and displaying image data in communication data.

In this embodiment, although it is assumed that image data is transmitted from the base unit 2 to the monitor unit 3 and the monitor unit 3 displays the image data, the embodiment is not limited thereto, but audio data may be transmitted in a wireless LAN communication system using a combination of the monitor unit 3 and a speaker.

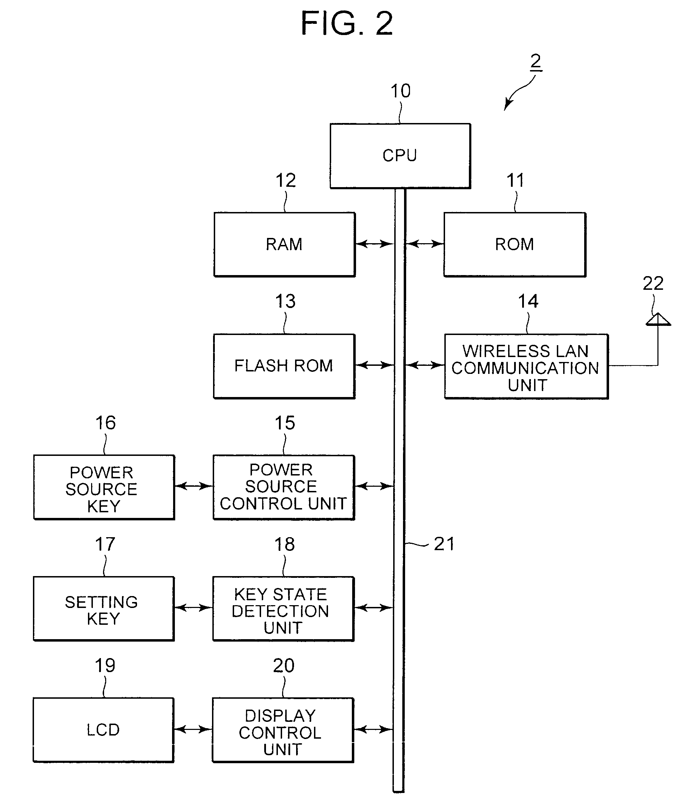

Next, the structure of the base unit 2 will be described with reference to Fig. 2.

As shown in Fig. 2, the base unit 2 is constituted of: a central processing unit (CPU) 10 for performing a predetermined arithmetic and logical operation; a read-only memory (ROM) 11 for storing various control programs and the like; a random access memory (RAM) 12 as a working memory for CPU 10; a flash ROM 13 for storing predetermined wireless LAN system information; a wireless LAN communication unit 14 for communicating with an external; a power source control unit 15 for controlling on/off of a main power source of the base unit 2; a power source key 16 for inputting an on/off signal to the power source control unit 15; a key state detection unit 18 for detecting a state of a setting key 17 disposed in the base unit 2 at a predetermined position; a liquid crystal display (LCD) 19 for displaying SSID of the wireless LAN system, wireless LAN system information regarding authentication and encryption setting and the like, to be presented to users; and a display control unit 20 for controlling display of LCD 19, these components being interconnected by a bus 21.

CPU 10 executes various control processes in accordance with various control commands and various data supplied from the monitor unit 3 via the wireless LAN communication unit 14, or various programs stored in ROM 11.

The wireless LAN communication unit 14 starts communication with the monitor unit 3 by using preset wireless LAN system information. As the wireless LAN communication unit receives, via an antenna 22 connected thereto, various control commands and various data transmitted from the monitor unit 3, the wireless LAN communication unit sends the received commands and data to CPU 10 via the bus 21.

As a user depresses the power source key 16 disposed in the base unit 2 at a predetermined position, the power source control unit 15 controls a power source circuit (not shown) to start/stop a supply of drive current to each circuit and turn on/off the main power source of the base unit 2.

The key state detection unit 18 monitors always the state of the setting key 17. As a user depresses the setting key 17, this depression is notified to CPU 10. As this depression is notified to CPU 10, CPU 10 reads the wireless LAN system information setting program stored in ROM 11, and sets the wireless LAN system information to the wireless LAN communication unit 14, in accordance with a command written in the wireless LAN system information setting program.

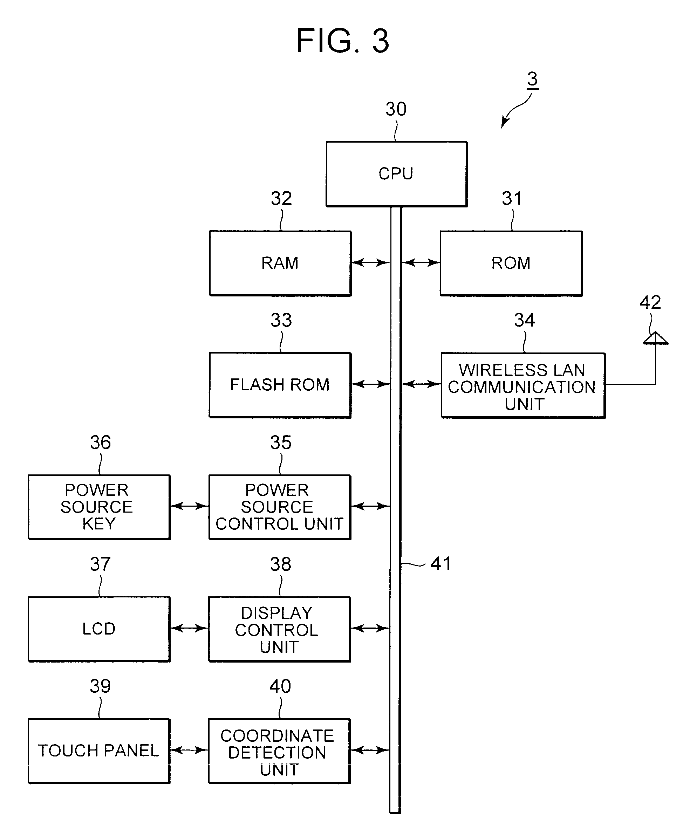

Next, the structure of the monitor unit 3 will be described with reference to Fig. 3.

As shown in Fig. 3, the monitor unit 3 is constituted of: a CPU 30 for performing a predetermined arithmetic and logical operation; a ROM 31 for storing various control programs and the like; a RAM 32 as a working memory for CPU 30; a flash ROM 33 for storing predetermined wireless LAN system information regarding the monitor unit 3; a wireless LAN communication unit 34 for communicating with an external; a power source control unit 35 for controlling on/off of a main power source of the monitor unit 3; a power source key 36 for inputting an on/off signal to the power source control unit 35; a display control unit 38 for controlling a liquid crystal display (LCD) 36; a touch panel 39 disposed on LCD 37; and a coordinate detection unit 40 for detecting a coordinate position designated by a user by operating the touch panel 39, these components being interconnected by a bus 41.

In the state that wireless LAN system information of the base unit 2 is not set to the wireless LAN communication unit 34, for example, CPU 30 supplies the display control unit 38 with image data basing upon the various control programs stored in ROM 31 to display a predetermined graphical user interface (GUI) screen for wireless LAN system information setting on LCD 37.

When the GUI screen is displayed on LCD 37, CPU 30 recognizes an input indicating setting of the wireless LAN system, from a detection result by the coordinate detection unit 40, reads the wireless LAN system information setting program stored in ROM 31, and sets the wireless LAN system information to the wireless LAN communication unit 34 in accordance with a command written in the wireless LAN system information setting program.

The power source control unit 35 monitors always whether a user depresses the power source key 36 disposed in the monitor unit 3 at a predetermined position. As the power source key 36 is depressed, the power source control unit 35 controls a power source circuit (not shown) to start/stop a supply of drive current to each circuit and turn on/off the main power source of the monitor unit 3.

When the wireless LAN communication unit 34 receives, via an antenna 42 connected thereto, various control commands transmitted from the base unit 2 using the set wireless LAN system information, the wireless LAN communication unit sends the received commands to CPU 30 via the bus 41.

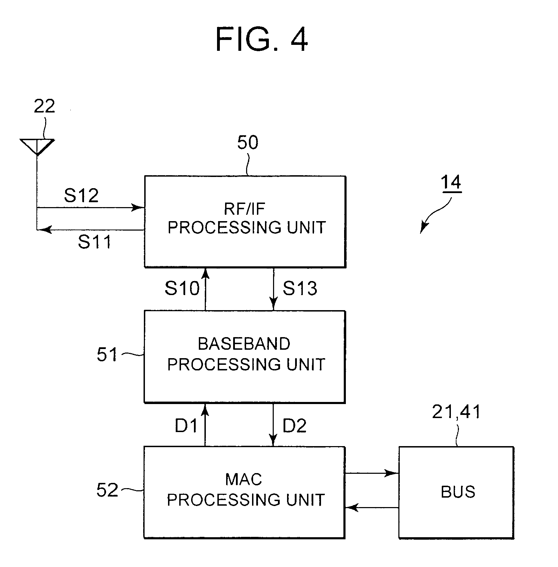

Fig. 4 shows the specific structure of the wireless LAN communication unit 14 of the base unit 2.

As shown in Fig. 4, the wireless LAN communication unit 14 is constituted of a radio frequency (RF)/intermediate frequency (IF) processing unit 50, a baseband processing unit 51, and a media access control (MAC) processing unit 52.

First, a transmission process of the wireless LAN communication unit 14 will be described. The MAC processing unit 52 executes a predetermined MAC process for various data supplied via the bus 21, the MAC process including an encryption process based on encryption information contained in the wireless LAN system information, frame format conversion, send timing control and the like, and sends obtained frame data D1 to the baseband processing unit 51.

The baseband processing unit 51 modulates the supplied frame data D1 into an IQ signal S10 and sends the IQ signal S10 to the RF/IF processing unit 50.

The RF/IF processing unit 50 converts the IQ signal S10 supplied from the baseband processing unit 51 into an intermediate frequency (IF) signal, upconverts it to a radio frequency (RF) signal, amplifies the RF signal S11 and transmits it to the communication partner monitor unit 3 via the antennal 22.

Next, a reception process of the wireless LAN communication unit 14 will be described. As the antenna 22 receives a transmission signal from the communication partner monitor unit 3, the RF/IF processing unit 50 downconverts the received RF signal S12 into an IF signal, converts the IF signal further into an IQ signal S 13, and sends it to the baseband processing unit 51.

The baseband processing unit 51 demodulates the IQ signal S 13 sent from the RF/IF processing unit 50, and sends obtained frame data D2 to the MAC processing unit 52.

The MAC processing unit 52 decodes the frame data D2 supplied from the baseband processing unit 51 in accordance with the encryption information contained in the wireless LAN communication system, extracts necessary data, and sends the necessary data to corresponding blocks such as CPU 10 via the bus 22.

The wireless LAN communication unit 34 of the monitor unit 3 has a similar structure to that of the wireless LAN communication unit 14 of the base unit 2, and performs a transmission/reception process similar to that described above.

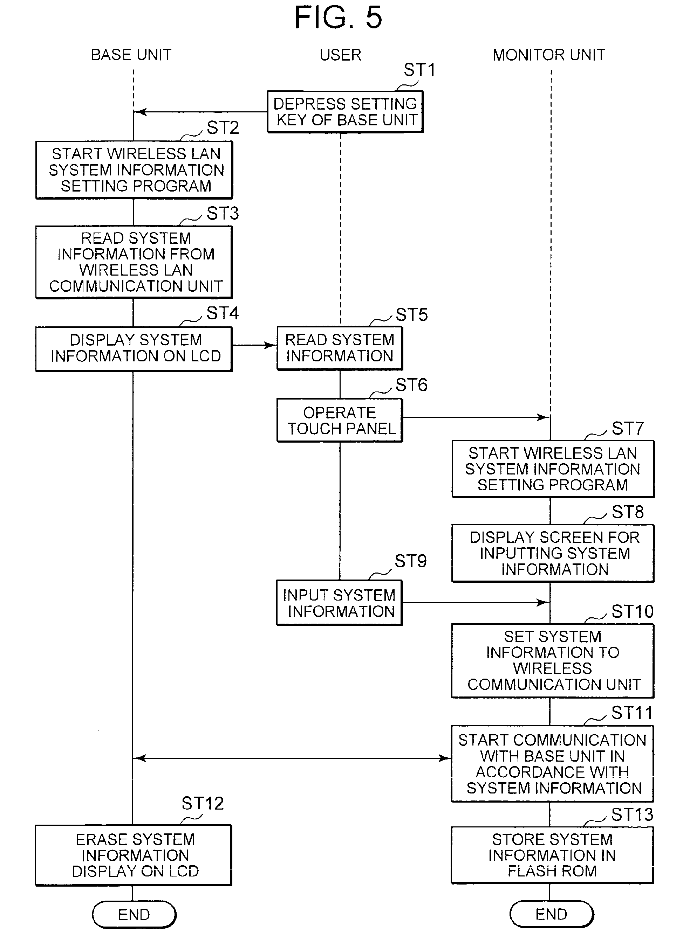

Next, with reference to Fig. 5, description will be made on a setting process for the wireless LAN system 1 to be executed by the base unit 2 and monitor unit 3. Communication is established between the base unit 2 and monitor unit 3 of the wireless LAN system 1, by depressing the setting key 17 of the base unit 2 and displaying a predetermined GUI screen on LCD 37 and touching the touch panel 39 at a predetermined position. The base unit 2 and monitor unit 3 have a wireless LAN information setting function installed therein for sharing the wireless LAN system information and setting this information to the wireless LAN communication units 14 and 34. In the flow chart shown in Fig. 5, the left portion shows a temporal flow of the operation of the base unit 2 based on the statement of the wireless LAN system information setting program, the central portion shows a temporal flow of the operation of a user, and the right portion shows a temporal flow of the operation of the monitor unit 3 based on the statement of the wireless LAN system information setting program.

At Step ST1, a user depresses the setting key 17 of the base unit 2.

As the user depresses the setting key 17 of the base unit 3, at Step ST2, CPU 10 reads the wireless LAN system information setting program from ROM 11 and develops it in RAM 12.

As the wireless LAN system information setting program is developed in RAM 12, at Step ST3 CPU 10 acquires system information on settings such as encryption information from the wireless LAN communication unit 14.

As the system information is acquired, at Step ST4 CPU 10 displays the system information on LCD 19 in accordance with a command written in the wireless LAN system information setting program.

As the system information is displayed on LCD 19, at Step ST5 the user reads the system information.

A method of making a user recognize the system information is not limited to the display on LCD 19, but the system information may be supplied as voices from a speaker.

At Step ST6 the user operates the touch panel 39 to make the monitor unit 3 activate the wireless LAN system information setting program.

When the user operates the touch panel 39, at Step ST7 CPU 30 reads the wireless LAN system information setting program from ROM 31 and develops it in RAM 32.

As the monitor unit 3 activates the wireless LAN system information setting program, at Step ST8 CPU 30 of the monitor unit 3 makes the display control unit 38 display a screen allowing the user to input system information, in accordance with a command written in the wireless LAN system information setting program.

At Step ST9, the user inputs the system information read from LCD 19 by using an input means of the touch panel 39, in accordance with an input screen of LCD 37.

As the user inputs the system information to the monitor unit, at Step ST10 CPU 30 sets the system information to the MAC processing unit 52 of the wireless LAN communication unit 34, in accordance with a command written in the wireless LAN system information setting program.

As the system information is set to the wireless LAN communication unit 34, at Step ST11 CPU 30 searches the base unit 2 and starts communicating with the base unit 2, in accordance with a command written in the wireless LAN system information setting program.

As described above, since the communication apparatus is installed at a location limiting persons to enter, the range of providing each user with the system information is limited and the user can perform communication setting safely. The wireless LAN system 1 can perform the authentication process and setting of predetermined system information both at the same time between the base unit 2 and monitor unit 3.

When communication starts between the base unit 2 and monitor unit 3, at Step ST12 CPU 10 of the base unit 2 operates to erase the screen of LCD 19 on which the system information is being displayed, in accordance with a command written in the wireless LAN system information setting program. If communication between the base unit 2 and monitor unit 3 is not confirmed after a lapse of a predetermined time, CUP 10 operates to erase the screen of LCD 19 displaying the system information, in order to prevent the displayed system information from being viewed by a third party.

At Step ST13 CPU 30 of the monitor unit 3 stores the system information in the flash ROM 33 in accordance with a command written in the wireless LAN system information setting program.

Since the system information for establishing connection is stored in the flash ROM 33, when the monitor unit 3 is activated thereafter, the wireless LAN system 1 can start wireless communication without executing again a connection setting operation.

As described above, since a user recognizes the system information displayed on LCD 19 of the base unit 2 and inputs it to the monitor unit 3, it is possible to set the wireless LAN system 1 safely and easily.

Next, description will be made on a wireless LAN system of the second embodiment adopting the present invention.

Similar to the first embodiment, the wireless LAN system of the second embodiment is constituted of a base unit 2 which is a communication apparatus having a wireless LAN communication means, and a monitor unit 3 for communicating with the base unit 2 via the wireless communication means.

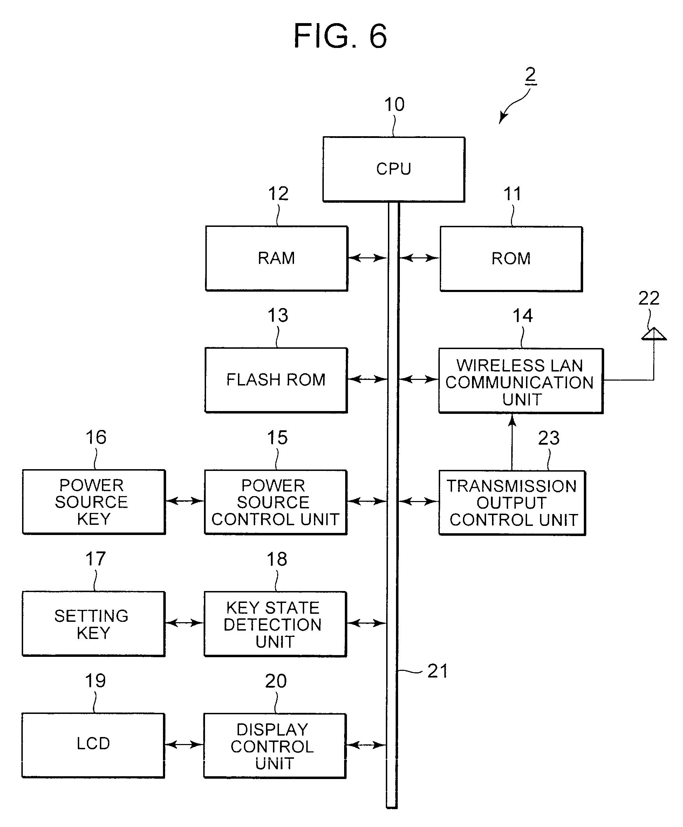

The base unit 2 of the second embodiment is structured as shown in Fig. 6, and the description of components having similar functions as those of the first embodiment is omitted. A transmission power control unit 23, not provided in the base unit 2 of the first embodiment, is connected to a bus 21 and a wireless LAN communication unit 14, and controls a transmission output of communication by the wireless LAN communication unit 14.

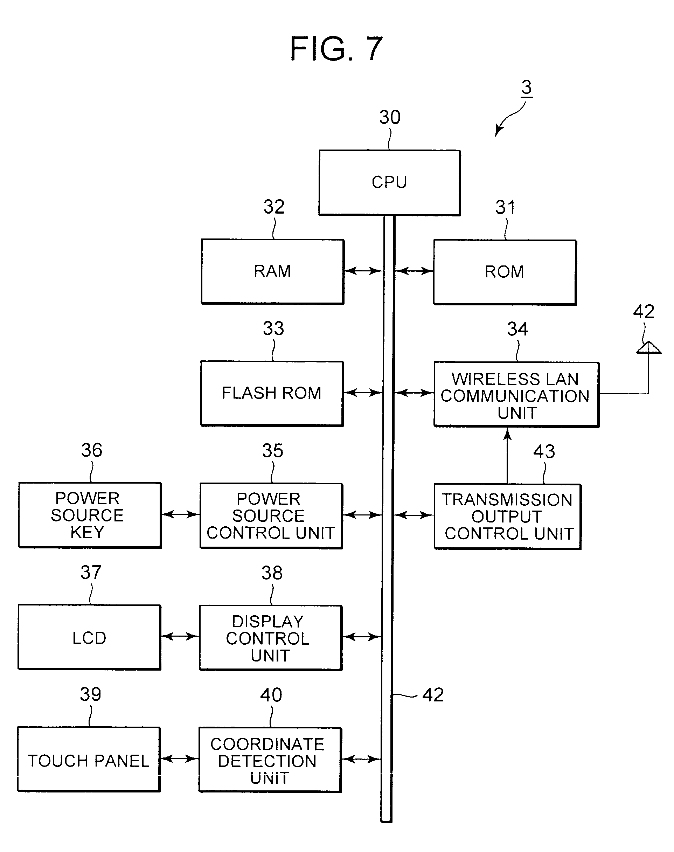

Next, the structure of the monitor unit 3 will be described with reference to Fig. 7.

As shown in Fig. 7, the monitor unit 3 has components having similar functions to those of the monitor unit 3 of the first embodiment, and the description thereof is omitted. A transmission output control unit 43, not provided in the monitor unit 3 of the first embodiment, is connected to a bus 41 and a wireless LAN communication unit 34, and controls a transmission output of communication by the wireless LAN communication unit 14.

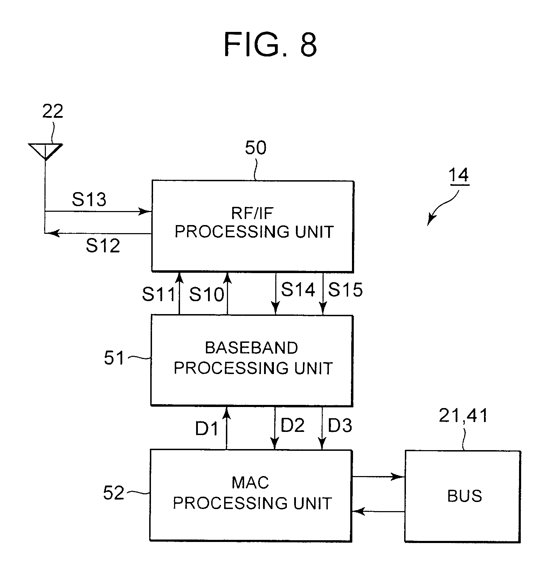

Fig. 8 shows the specific structure of the wireless LAN communication unit 14 of the base unit 2.

As shown in Fig. 8, the wireless LAN communication unit 14 is constituted of a radio frequency (RF)/intermediate frequency (IF) processing unit 50, a baseband processing unit 51, and a media access control (MAC) processing unit 52.

First, a transmission process will be described. The MAC processing unit 52 executes a predetermined MAC process for various data supplied via the bus 21, the MAC process including an encryption process based on encryption information contained in the wireless LAN system information, frame format conversion, send timing control and the like, and sends obtained frame data D1 to the baseband processing unit 51.

The baseband processing unit 51 modulates the supplied frame data D1 into an IQ signal S10 and sends the IQ signal S10 to the RF/IF processing unit 50. The baseband processing unit 51 also sends a transmission output control signal corresponding to a transmission output level set in the MAC processing unit 52, to the RF/IF processing unit 50, to make the RF/IF processing unit 50 set a gain of an unrepresented amplifier therein to the set transmission output level.

The RF/IF processing unit 50 converts the IQ signal S 10 supplied from the baseband processing unit 51 into an intermediate frequency (IF) signal, upconverts it to a radio frequency (RF) signal, amplifies the RF signal S12 and transmits it to the communication partner monitor unit 3 via the antenna 22.

Next, a reception process will be described. As the antenna 22 receives a signal transmitted from the communication partner monitor unit 3, the RF/IF processing unit 50 downconverts the received RF signal S13 into an IF signal, converts the IF signal further into an IQ signal S14, and sends it to the baseband processing unit 51. The RF/IF processing unit 50 sends a detection result by an unrepresented internal detector circuit to the baseband processing unit 51 as a detection signal S15.

The baseband processing unit 51 demodulates the IQ signal 14 supplied from the RF/IF processing unit 50 and sends obtained frame data D2 to the MAC processing unit 52. The baseband processing unit detects a received signal strength indicator (RSSI) value representative of the intensity of a reception signal (i.e., a received RF signal), from the detection signal S15 supplied from the RF/IF processing unit 50, and sends the detection result to the MAC processing unit 52 as RSSI value information D3.

The MAC processing unit 52 decodes the frame data D2 supplied from the baseband processing unit 51 in accordance with encryption information contained in the wireless LAN system information, extracts necessary data, and sends this data to corresponding blocks such as CPU 10. In this case, if the RSSI value of a reception signal identified by the RSSI value information D3 is smaller than a predetermined value preset by CPU 10 or CPU 30, the wireless LAN communication unit 14 discards the frame data D2.

In this manner, the wireless LAN communication unit 14 can communicate with the communication partner by satisfying communication standards by discarding, when necessary, frame data having a lower signal level.

The wireless LAN communication unit 34 of the monitor unit 3 has a similar structure to that of the wireless LAN communication unit 14, and performs a transmission/reception process similar to that described above.

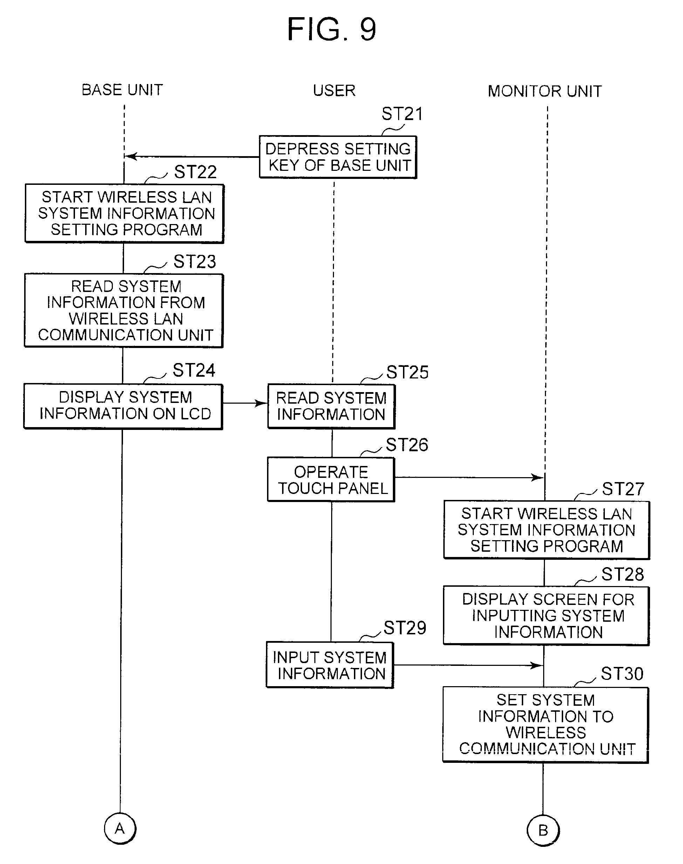

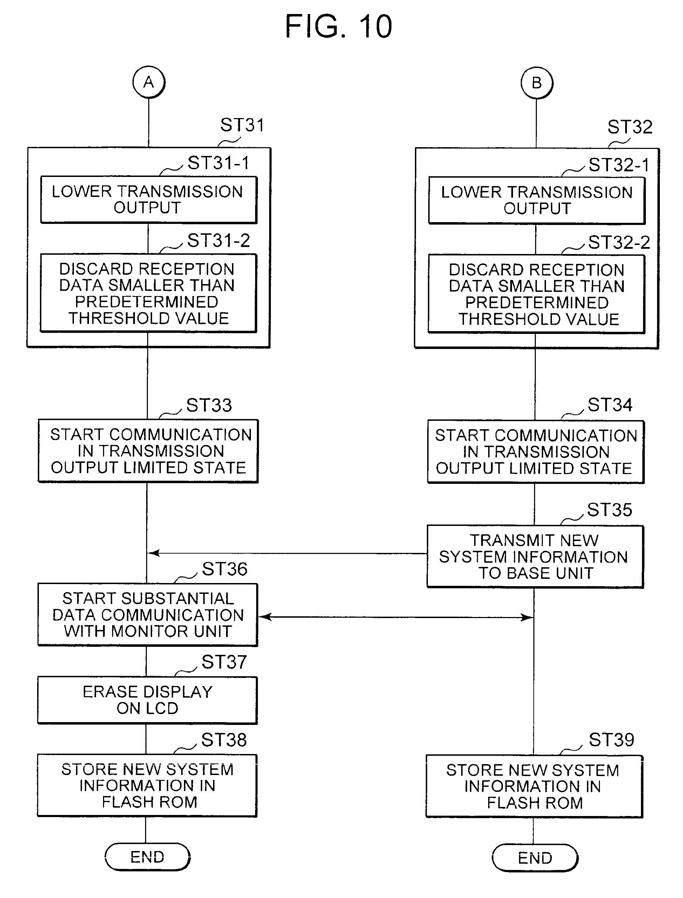

Next, with reference to Figs. 9 and 10, description will be made on a setting process for the wireless LAN system to be executed by the base unit 2 and monitor unit 3.

Communication is established between the base unit 2 and monitor unit 3 by depressing the setting key 17 of the base unit 2 and displaying a predetermined GUI screen on LCD 37 of the monitor unit 3 and touching the touch panel 39 at a predetermined position. The base unit 2 and monitor unit 3 have a wireless LAN information setting function installed therein for sharing the wireless LAN system information and setting this information to the wireless LAN communication units 14 and 34. In the flow chart shown in Figs. 9 and 10, the left portion shows a temporal flow of the operation of the base unit 2 based on the statement of the wireless LAN system information setting program, the central portion shows a temporal flow of the operation of a user, and the right portion shows a temporal flow of the operation of the monitor unit 3 based on the statement of the wireless LAN system information setting program.

At Steps ST21 to ST30 shown in Fig. 9, the wireless LAN system 1 executes processes similar to those of the setting process of the first embodiment, in accordance with commands written in the wireless LAN system information setting program, and the description thereof is omitted. In the first embodiment, substantial data communication starts after authentication and communication connection are completed by the above-described processes. However, in the setting process for the wireless LAN system of the second embodiment, data communication starts after processes at Steps ST31 to ST36 shown in Fig. 10 are executed.

At Step ST31 communication setting is performed for the wireless LAN communication unit 14 of the base unit 2. Similarly, at Step ST32 communication setting is performed for the wireless LAN communication unit 34 of the monitor unit 3. The setting works at Steps ST31 and ST32 are not necessarily aligned in chronological order, but after each of Steps ST31 and ST32 is completed, a corresponding one of Steps ST33 and ST34 is executed.

At Step ST31-1 CPU 10 sets a predetermined value to the MAC processing unit 52 of the wireless LAN communication unit 14 to lower a transmission signal output level to a predetermined minimum level, in accordance with a command written in the wireless LAN system information setting program.

At Step ST31-2 CPU 10 sets the wireless LAN communication unit 14 in such a manner that the wireless LAN communication unit 14 discards reception data having a reception signal level smaller than a predetermined threshold value. Specifically, CPU 10 sets a predetermined value to the MAC processing unit 52 of the wireless LAN communication unit 14, as a lower limit value of the RSSI value of the reception signal being always detected by the wireless LAN communication unit 14.

At Step ST32-1 CPU 30 sets a predetermined value to the MAC processing unit 52 of the wireless LAN communication unit 34 to lower a transmission signal output level to a predetermined minimum level, in accordance with a command written in the wireless LAN system information setting program.

At Step ST32-2 CPU 30 sets the wireless LAN communication unit 14 in such a manner that the wireless LAN communication unit 34 discards reception data having a reception signal level smaller than a predetermined threshold value.

As described above, the wireless LAN communication units 14 and 34 perform setting for lowering a reception signal output level to prevent a malicious third party from tapping communication.

When the wireless LAN system information is set to the base unit 2 and monitor unit 3 of the wireless LAN system 1, a transmission output is suppressed to limit a radio wave arrival distance on the assumption that the base unit 2 and monitor unit 3 are located at a very near distance. The base unit 2 and monitor unit 3 receive only data considered to be transmitted from a very near distance and discard other data, to thereby improve security when the wireless LAN system 1 is set.

Accordingly, the wireless LAN communication units 14 and 34 monitor always the RSSI value of a reception signal, receive data having the RSSI value equal to or larger than the values set by the CPU 10 and CPU 30 and discard other data.

At Step ST33 after Step ST31, CPU 10 of the base unit 2 starts communicating with the monitor unit 3 in the state of a limited radio wave transmission output, in accordance with a command written in the wireless LAN system information setting program.

Similar to the base unit 2, at Step ST34 after Step ST32, CPU 30 of the monitor unit 3 starts communicating with the base unit 2 in the state of a limited radio wave transmission output, in accordance with a command written in the wireless LAN system information setting program.

As communication with the base unit 2 starts in the state of a limited transmission output, at Step ST35 CPU 30 of the monitor unit 3 transmits the system information newly input via the touch panel 39 to the base unit 2, in accordance with a command written in the wireless LAN system information setting program.

At Step ST32 CPU 10 of the base unit 2 receives the new system information transmitted from the monitor unit 3 and starts data communication such as image data communication with the monitor unit 3 in accordance with the new system information, in accordance with a command written in the wireless LAN system information setting program.

As the substantial data communication starts between the base unit 2 and monitor unit 3, at Step ST37 CPU 10 of the base unit 2 erases the screen on LCD 19 displaying the system information, in accordance with a command written in the wireless LAN system information setting program. If communication with the monitor unit 3 does not start after a lapse of a predetermined time, CPU 10 erases the screen on LCD 19 displaying the system information, in order to prevent the system information from being viewed by a third party.

At Step ST38 CPU 10 of the base unit 2 stores the new system information in the flash ROM 13 according to a command written in the wireless LAN system information setting program.

At Step ST39 CPU 30 of the monitor unit 3 stores the new system information in the flash ROM 33 in accordance with to a command written in the wireless LAN system information setting program.

As described above, by limiting the radio wave arrival distance, a user can input system information to the monitor unit 3, the setting procedure of the second embodiment is supplemental to the setting procedure of the first embodiment, and the wireless LAN system can be set more safely.

The present invention is not limited only to the above-described embodiments, but it is obvious that various modifications are possible without departing from the gist of the present invention.

The present invention contains subject mater related to Japanese Patent Application No. JP2005-217806 filed in the Japanese Patent Office on July 27, 2005, the entire contents of which being incorporated herein by reference.

Various respective aspects and features of the invention are defined in the appended claims. Features from the dependent claims may be combined with features of the independent claims as appropriate and not merely as explicitly set out in the claims.

Embodiments of the present invention can provide a communication system, a communication system operates in accordance with predetermined communication standards by setting predetermined system information within a communication apparatus. The communication system includes a first communication apparatus having communication control means for setting the system information, communication means based on the system information, system information storage means, and system information providing means for providing a user with the information. The communications system also includes second communication apparatus having communication control means for setting the information, communication means, system information storage means, and system information input means. In operation, the first communication apparatus reads the information from the storage means, the system information providing means provides the user with the information, the user inputs the information to the second communication apparatus to share the information, and communication with the second communication apparatus starts; and when the information is input, the second communication apparatus stores the input information in the system information storage means to share, and communication with the first communication apparatus starts.

## Claims

1. A communication system for performing communication in conformity with predetermined communication standards by setting predetermined system information to a communication apparatus, the communication system comprising:
a first communication apparatus having communication control means for setting system information to allow communication, communication means for performing communication based on said system information set by said communication control means, system information storage means for storing said system information for communication, and system information providing means for providing a user with said system information in a recognizable state; and
a second communication apparatus having communication control means for setting said system information to allow communication, communication means for performing communication based on said system information set by said communication control means, system information storage means for storing said system information for communication, and system information input means for inputting said system information;
wherein said first communication apparatus reads said system information from said system information storage means, said system information providing means provides the user with said system information in a recognizable state, the user inputs said system information to said second communication apparatus to share said system information with said second communication apparatus, and communication with said second communication apparatus starts in accordance with the shared system information; and
when said system information is input from said system information input means, said second communication apparatus stores the input system information in said system information storage means to share said system information with said first communication apparatus, and communication with said first communication apparatus starts in accordance with the shared system information.

2. The communication system according to claim 1, wherein said system information is identification information of a network and communication encryption information, the identification information and the communication encryption information being common in said network.

3. The communication system according to claim 1;
wherein after said system information is shared with said second communication apparatus, said first communication apparatus sets in such a manner that said communication control means makes said communication means lower an output level of a transmission signal, discard reception data having a reception signal level lower than a predetermined value and set in a communicable state, and said first communication apparatus receives new system information transmitted from said second communication apparatus via said communication means and communicates with said second communication apparatus in accordance with said new system information; and
after said system information is shared with said first communication apparatus, said second communication apparatus sets said communication means in a communicable state by setting said communication means to lower an output level of a transmission signal and discard reception data having a reception signal level lower than the predetermined level, and said second communication apparatus transmits said new system information to said first communication apparatus via said communication means and communicates with said first communication apparatus in accordance with said new system information.

4. A communication apparatus in a communication system for performing communication in conformity with predetermined communication standards by setting predetermined system information to the communication apparatus, the communication apparatus comprising:
communication control means for setting system information to allow communication;
communication means for performing communication based on said system information;
system information storage means for storing said system information; and
system information providing means for providing a user with said system information in a recognizable state,
wherein said system information is read from said system information storage means and provided to a user in a recognizable state to share said system information with another communication apparatus and start communication with said another communication apparatus in accordance with the shared system information.

5. The communication apparatus according to claim 4, wherein said system information is identification information of a network and communication encryption information, the identification information and the communication encryption information being common in said network.

6. The communication apparatus according to claim 4, wherein after said system information is shared with said another communication apparatus, said communication means is set in a communicable state by lowering an output level of a transmission signal and discarding reception data having a reception signal level lower than a predetermined value, and new system information transmitted from said another communication apparatus is received via said communication means to communicate with said another communication apparatus in accordance with said new system information.

7. A communication apparatus for communicating with another communication apparatus having system information providing means for providing system information, in a communication system for performing communication in conformity with predetermined communication standards by setting in common predetermined system information, the communication apparatus comprising:
communication control means for setting system information to allow communication;
communication means for performing communication based on said system information;
system information storage means for storing said system information; and
system information input means for inputting said system information;
wherein when said system information is input from said system information input means, said input system information being stored in said system information storage means and shared with said another communication apparatus, the communication apparatus starts communication with said another communication apparatus in accordance with said shared system information.

8. The communication apparatus according to claim 7, wherein said system information is identification information of a network and communication encryption information, the identification information and the communication encryption information being common in said network.

9. The communication apparatus according to, claim7, wherein after said system information is shared with said another communication apparatus, said communication means is set in a communicable state by lowering an output level of a transmission signal and discarding reception data having a reception signal level lower than a predetermined value, and new system information is transmitted to said another communication apparatus to start communication with said another communication apparatus in accordance with said new system information.

10. A communication method for a communication system for performing communication in conformity with predetermined communication standards by setting predetermined system information to a communication apparatus, wherein:
a first communication apparatus reads said system information stored in advance and provides a user with said system information in a recognizable state, the user inputs said system information to a second communication apparatus to share said system information with said second communication apparatus, and communication with said second communication apparatus starts in accordance with the shared system information; and
when said system information is input, said second communication apparatus stores the input system information, and communication with said first communication apparatus starts in accordance with the shared system information with said first communication apparatus.

11. The communication method according to claim 10, wherein said system information is identification information of a network and communication encryption information, the identification information and the communication encryption information being common in said network.

12. The communication method according to claim 10;
wherein after said system information is shared with said second communication apparatus, said first communication apparatus sets in such a manner that an output level of a transmission signal is lowered and reception data having a reception signal level lower than a predetermined value is discarded, to ensure a communicable state, and said first communication apparatus receives new system information transmitted from said second communication apparatus to start communication with said second communication apparatus in accordance with said new system information; and
wherein after said system information is shared with said first communication apparatus, said second communication apparatus sets in such a manner that an output level of a transmission signal is lowered and reception data having a reception signal level lower than the predetermined level is discarded, to ensure a communicable state, and said second communication apparatus transmits new system information to said first communication apparatus to start communication with said first communication apparatus in accordance with said new system information.

13. A communication control method for a communication apparatus in a communication system for performing communication in conformity with predetermined communication standards by setting in common predetermined system information to the communication apparatus, the method comprising the steps of:
reading system information stored in advance and providing thereof to a user in a recognizable state to share said system information with another communication apparatus, and
communicating with said another communication apparatus in accordance with the shared system information.

14. The communication control method according to claim 13, wherein said system information is identification information of a network and communication encryption information, the identification information and the communication encryption information being common in said network.

15. The communication control method according to claim 13, wherein after said system information is shared with said another communication apparatus, said communication apparatus sets in such a manner that an output level of a transmission signal is lowered and reception data having a reception signal level lower than a predetermined value is discarded, and new system information transmitted from said another communication apparatus is received to communicate with said another communication apparatus in accordance with said new system information.

16. A communication control method for a communication apparatus for communicating with another communication apparatus having system information providing means for providing system information, in a communication system for performing communication in conformity with predetermined communication standards by setting predetermined system information, the control method comprising the steps of:
when system information is input, sharing said input system information with said another communication apparatus, and
communicating with said another communication apparatus in accordance with said shared system information.

17. The communication control method according to claim 16, wherein said system information is identification information of a network and communication encryption information, the identification information and the communication encryption information being common in said network.

18. The communication control method according to claim 16, wherein after said system information is shared with said another communication apparatus, said communication apparatus sets in such a manner an output level of a transmission signal is lowered and reception data having a reception signal level lower than a predetermined value is discarded, to ensure a communicable state, and new system information is transmitted to said another communication apparatus to communicate with said another communication apparatus in accordance with said new system information.

19. A communication control program to be executed by a computer and installed in a communication apparatus in a communication system for performing communication in conformity with predetermined communication standards by setting predetermined system information to the communication apparatus, wherein said communication apparatus reads system information stored in advance and provides a user with said system information in a recognizable state, the user inputs said system information to another communication apparatus to share said system information with said another communication apparatus, and communication with said another communication apparatus starts in accordance with the shared system information.

20. The communication control program according to claim 19, wherein said system information is identification information of a network and communication encryption information, the identification information and the communication encryption information being common in said network.

21. The communication control program according to claim 19, wherein after said system information is shared with said second communication apparatus, said communication apparatus sets in such a manner that an output level of a transmission signal is lowered and reception data having a reception signal level lower than a predetermined value is discarded, to establish communication between said communication apparatus and said another communication apparatus.

22. A communication control program to be executed by a computer and installed in a communication apparatus for communicating with another communication apparatus having system information providing means for providing system information, in a communication system for performing communication in conformity with predetermined communication standards by setting predetermined system information; wherein when system information is input, said input system information is shared with said another communication apparatus to communicate with said another communication apparatus in accordance with said shared system information.

23. The communication control program according to claim 22, wherein said system information is identification information of a network and communication encryption information, the identification information and the communication encryption information being common in said network.

24. The communication control program according to claim 22, wherein after said system information is shared with said another communication apparatus, said communication apparatus sets in such a manner an output level of a transmission signal is lowered and reception data having a reception signal level lower than a predetermined value is discarded, to ensure a communicable state, and new system information is transmitted to said another communication apparatus to communicate with said another communication apparatus in accordance with said new system information.

25. A program storage medium storing a communication control program to be executed by a computer and installed in a communication apparatus in a communication system for performing communication in conformity with predetermined communication standards by setting predetermined system information to the communication apparatus, wherein said communication apparatus reads system information stored in advance and provides a user with said system information in a recognizable state, the user inputs said system information to another communication apparatus to share said system information with said another communication apparatus, and communication with said another communication apparatus starts in accordance with the shared system information.

26. The program storage medium according to claim 25, wherein said system information is identification information of a network and communication encryption information, the identification information and the communication encryption information being common in said network.

27. The program storage medium according to claim 25, wherein after said system information is shared with said second communication apparatus, said communication apparatus sets in such a manner that an output level of a transmission signal is lowered and reception data having a reception signal level lower than a predetermined value is discarded, and receives new system information from said another communication apparatus to communicate with said another communication apparatus in accordance with said new system information.

28. A program storage medium storing a communication control program to be executed by a computer and installed in a communication apparatus for communicating with another communication apparatus having system information providing means for providing system information, in a communication system for performing communication in conformity with predetermined communication standards by setting predetermined system information, wherein when system information is input, said input system information is stored and transmitted, and said another communication apparatus executes an authentication process in accordance with said system information to start communication.

29. The program storage medium according to claim 28, wherein said system information is identification information of a network and communication encryption information, the identification information and the communication encryption information being common in said network.

30. The program storage medium according to claim 28, wherein after said system information is shared with said another communication apparatus, said communication apparatus sets in such a manner an output level of a transmission signal is lowered and reception data having a reception signal level lower than a predetermined value is discarded, to ensure a communicable state, and new system information is transmitted to said another communication apparatus to communicate with said another communication apparatus in accordance with said new system information.
